# EUROPÄISCHE PATENTSCHRIFT

(11) **EP 3 184 445 B1**
(45) Veröffentlichungstag und Bekanntmachung des Hinweises auf die Patenterteilung: **20.06.2018**
(21) Anmeldenummer: 16204991.0
(22) Anmeldetag: 19.12.2016
(51) Int. Cl.: B65B 53/06

(54) **SCHRUMPFRAHMEN MIT WENIGSTENS EINEM AN EIN GEBLÄSE ANSCHLIESSBAREN LUFTEINLASS ZUM ZUFÜHREN VON BLASLUFT**
SHRINKING FRAME WITH AT LEAST ONE AIR INLET CONNECTING TO A BLOWER APPARATUS FOR FEEDING OF COMPRESSED AIR
CADRE DE RÉTRACTION COMPRENANT AU MOINS UNE ADMISSION D'AIR POUVANT ÊTRE RACCORDÉE À UNE SOUFFLANTE DESTINÉE À GUIDER LE JET D'AIR

(30) Priorität: 22.12.2015 DE 202015107021 U
(43) Veröffentlichungstag der Anmeldung: 28.06.2017
(73) Patentinhaber: MSK - Verpackungs-Systeme GmbH, 47533 Kleve (DE)
(72) Erfinder:
(74) Vertreter: Dr. Stark & Partner Patentanwälte mbB

(56) Entgegenhaltungen:
- DE-A1- 2 125 568
- SU-A1- 958 248
- US-A1- 2013 167 488

## Beschreibung

Die Erfindung betrifft einen Schrumpfrahmen mit wenigstens einem an ein Gebläse anschließbaren Lufteinlass zum Zuführen von Blasluft, mit zumindest einer an den Lufteinlass anschließenden, durch Wandungen gebildeten Heizkammer mit einem Heizkammereinlass und einem Heizkammerauslass sowie einem zwischen dem Heizkammereinlass und dem Heizkammerauslass vorgesehenen, vorzugsweise elektrisch beheizbaren, Heizelement, durch das die die Heizkammer durchströmende Blasluft in der Heizkammer erhitzt wird, wobei der Schrumpfrahmen weiterhin noch einen sich an den Heizkammerauslass anschließenden Luftauslass zum Ausblasen der Heißluft aufweist.

Derartige Schrumpfrahmen werden zum Schrumpfen von Schrumpfhauben oder Schrumpffolien, die einen Gutstapel umgeben, eingesetzt. Der Schrumpfrahmen besteht aus vier Rahmensegmenten und weist insoweit vier Rahmenseiten auf, die eine mittige Öffnung umgeben, welche so groß ist, dass der Schrumpfrahmen den Gutstapel umgebend auf- und niederbewegt werden kann, wobei die aus dem Luftauslass austretende Heißluft die Schrumpfhaube oder Schrumpffolie schrumpft. Bei einem Schrumpfrahmen mit elektrischer Beheizung wird die zugeführte Luft von elektrisch beheizten Heizelementen erhitzt, die in den Rahmensegmenten untergebracht sind. Da die Rahmensegmente nur verhältnismäßig geringe Querschnitte besitzen, ist der Strömungsweg, der für die Erhitzung der Blasluft zur Verfügung steht, nur kurz.

Ein solcher Schrumpfrahmen ist aus der EP 0 386 530 B1 bekannt. Die Heizkammer ist durch eine Trennwand in der Mitte geteilt, so dass die Blasluft um 180° innerhalb der Heizkammer umgelenkt werden muss. Als nachteilig erweist sich, dass sich in der Heizkammer ungleichmäßige Druckverhältnisse und schlechte aerodynamische Verhältnisse einstellen können. Dies hat eine geringere Effizienz der Heizkammer zur Folge. Auch können - sofern elektrische Heizstäbe vorgesehen sind - diese durchbrennen. Auch können ungleichmäßige Schrumpfergebnisse auftreten, wobei solche Probleme insbesondere bei Leistungen von mehr als 60 zu schrumpfenden Paletten pro Stunde auftreten können.

Die US 2013/167488 A1 beschreibt einen Schrumpfrahmen mit wenigstens einem an ein Gebläse anschließbaren Lufteinlass zum Zuführen von Blasluft mit zumindest einer an den Lufteinlass anschließenden, durch Wandungen gebildeten Heizkammer mit einem Heizkammereinlass und einem Heizkammerauslass sowie einem zwischen dem Heizkammereinlass und dem Heizkammerauslass vorgesehenen, elektrisch beheizbaren Heizelement, durch das die die Heizkammer durchströmende Blasluft in der Heizkammer erhitzt wird, wobei der Schrumpfrahmen weiterhin noch einen sich an den Heizkammerauslass anschließenden Luftauslass zum Ausblasen der Heißluft aufweist, wobei in zumindest einer Heizkammer im Abstand zu jeder Wandung der Heizkammer wenigstens eine Trennwandung vorgesehen ist, welche die Heizkammer in einen als Strömungskanal mit einer anströmseitigen Eingangsöffnung und einer abströmseitigen Ausgangsöffnung fungierenden ersten Teilbereich und in einen durch den Rest gebildeten als Ansaugkanal zum Ansaugen von Sekundärluft mit einer abströmseitigen Ansaugöffnung und einer anströmseitigen Auslassöffnung fungierenden zweiten Teilbereich aufteilt, wobei wenigstens eines der Heizelemente im Inneren des Strömungskanals angeordnet ist.

Aufgabe der Erfindung ist es, einen Schrumpfrahmen der eingangs beschriebenen Gattung so zu verbessern, dass er eine höhere Heizeffizienz bei einem guten Schrumpfergebnis aufweist.
Diese Aufgabe wird dadurch gelöst, dass in zumindest einer Heizkammer im Abstand zu zumindest einer Wandung der Heizkammer, vorzugsweise im Abstand zu jeder Wandung der Heizkammer, wenigstens eine, vorzugsweise rohrförmige, Trennwandung vorgesehen ist, welche die Heizkammer in einen als Strömungskanal mit einer anströmseitigen Eingangsöffnung und einer abströmseitigen Ausgangsöffnung fungierenden ersten Teilbereich und in einen durch den Rest gebildeten als Ansaugkanal zum Ansaugen von Sekundärluft mit einer abströmseitigen Ansaugöffnung und einer anströmseitigen Auslassöffnung fungierenden zweiten Teilbereich aufteilt, wobei wenigstens eines der Heizelemente im Inneren des Strömungskanals angeordnet ist, und wobei der anströmseitigen Eingangsöffnung wenigstens eines Strömungskanals zumindest eine, auf die anströmseitige Eingangsöffnung dieses Strömungskanals ausgerichtete Blasluftöffnung unter Bildung zumindest eines Seiteneinlasses zugeordnet ist, über die die vom Gebläse zugeführte Blasluft in die dieser Blasluftöffnung zugeordnete anströmseitige Eingangsöffnung dieses Strömungskanals geblasen wird, so dass durch die in den Strömungskanal einströmende Blasluft Sekundärluft über den Seiteneinlass mit in den Strömungskanal eingesaugt wird.

Durch die angesaugte Sekundärluft werden auf der einen Seite die Wandungen der Heizkammer gekühlt, so dass der Schrumpfrahmen über seine Rahmenteile nicht soviel Wärme ungewollt an die Umgebung abstrahlt. Gleichzeitig dient die angesaugte Sekundärluft als Wärmeisolator für die Trennwandung. Auf der anderen Seite wird die Sekundärluft beim Strömen durch den Venturi-Effekt entlang der Außenseite der Trennwandung vorerhitzt, bevor sie sich mit der Sekundärluft vermischt und das Gemisch aus Blasluft und vorerhitzter Sekundärluft in den Strömungskanal zum Zwecke des Erhitzens geblasen wird. Infolgedessen kann durch das Beimischen der vorerhitzten Sekundärluft eine höhere Austrittstemperatur der Heißluft erzielt werden.

Dabei ist die abströmseitige Ausgangsöffnung wenigstens eines Strömungskanals auf den diesem Strömungskanal zugehörigen Luftauslass gerichtet, so dass die Heißluft möglichst druckverlustfrei über den Luftauslass ausgeblasen werden kann.

Zumindest eine Trennwandung kann beispielsweise aus Blech gefertigt sein. Die Trennwandung kann beispielsweise als rundes oder eckiges Rohr ausgebildet sein, das beispielsweise mittig in der Heizkammer angeordnet ist. Bei einer solchen Ausgestaltung ist der Strömungskanal im Abstand zu allen Wandungen angeordnet, so dass der Ansaugkanal dann den Strömungskanal völlig umschließt. Es ist aber auch durchaus möglich, dass - sofern die Heizkammer beispielsweise einen eckigen Strömungsquerschnitt aufweist - die Trennwandung als Blech ausgebildet ist, das in einem 45° Winkel in einer Ecke der Heizkammer angeordnet ist. Dann weist der Strömungskanal einen dreieckigen Querschnitt auf und der Ansaugkanal grenzt lediglich mit einer Seite an den dreieckigen Strömungskanal an. Auch eine umgekehrte Anordnung ist denkbar.

Es ist aber auch durchaus möglich, dass - beispielsweise bei einer Heizkammer mit einem eckigen Strömungsquerschnitt - eine Trennwandung vorgesehen ist, die sich zwischen zwei gegenüberliegenden Wandungen der Heizkammer erstreckt. Dann dient der Teilbereich auf der einen Seite der Trennwandung als Strömungskanal und der Teilbereich auf der anderen Seite der Trennwandung als Ansaugkanal.

Es ist aber auch denkbar, dass - beispielsweise bei einer Heizkammer mit einem eckigen Strömungsquerschnitt - zwei Trennwandungen vorgesehen sind, die parallel ausgerichtet sind und sich zwischen zwei gegenüberliegenden Wandungen der Heizkammer erstrecken. Dann dient der Teilbereich zwischen den beiden Trennwandungen als Strömungskanal und die beiden Teilbereiche, die zwischen der einen Trennwandung und der angrenzenden Wandung der Heizkammer einerseits und zwischen der anderen Trennwandung und der angrenzenden Wandung der Heizkammer andererseits gebildet werden, als Ansaugkanäle. Bei einer solchen Ausgestaltung weisen der Strömungskanal und die beiden Ansaugkanäle alle rechteckige Strömungsquerschnitte auf.

Die Blasluftöffung(en) kann (können) beliebig ausgebildet sein. Im einfachsten Fall kann zumindest eine Blasluftöffnung als Loch in dem die Blasluft zuführenden Bauteil ausgebildet sein. Dabei kann zumindest eine Blasluftöffnung beispielsweise in einer Wandung des Bauteils vorgesehen sein. Selbstverständlich sind auch andere Ausgestaltungen denkbar. So kann beispielsweise zumindest eine Blasluftöffnung als Blende oder als Düse ausgebildet sein.

Dabei ist der anströmseitigen Eingangsöffnung wenigstens eines Strömungskanals zumindest eine, auf die anströmseitige Eingangsöffnung dieses Strömungskanals ausgerichtete Blasluftöffnung unter Bildung eines Seiteneinlasses zugeordnet, so dass über den Seiteneinlass Sekundärluft angesaugt werden kann. Die Blasluftöffnung kann beispielsweise im Abstand zu der anströmseitigen Eingangsöffnung angeordnet sein, so dass der Seiteneinlass umlaufend ausgebildet ist. Es ist aber auch durchaus möglich, dass die Blasluftöffnung den Endbereich einer Lanze darstellt, wobei die Lanze mit ihrem Endbereich in die anströmseitige Eingangsöffnung des Strömungskanals hineinragt. Dann wird unter dem Seiteneinlass der ringförmige Freiraum zwischen dem Strömungskanal und der Außenseite der Lanze verstanden.

Der Schrumpfrahmen kann einen, vorzugsweise im Außenbereich des Schrumpfrahmens angeordneten, vom Lufteinlass ausgehenden, vorzugsweise umlaufend ausgebildeten, Luftverteilkanal aufweisen, in dem zumindest eine Blasluftöffnung vorgesehen ist. Hierdurch kann Blasluft auf unterschiedliche Heizkammern verteilt werden. So kann der Luftverteilkanal beispielsweise umlaufend ausgebildet sein, so dass dann über diesen Luftverteilkanal Blasluft zu allen Heizkammern in den vier Rahmensegmenten strömen kann.

In dem Luftverteilkanal kann zumindest eine, vorzugsweise als Klappe ausgebildete, Verstelleinrichtung zur Veränderung des Strömungsquerschnittes in dem Luftverteilkanal vorgesehen sein. Eine solche Ausgestaltung bietet sich insbesondere an, wenn mittels des Luftverteilkanals mehrere Heizkammern mit Blasluft versorgt werden.

Dabei kann die Größe zumindest einer Blasluftöffnung veränderbar sein. Hierzu kann beispielsweise eine Klappe oder ein Schieber im Bereich dieser Blasluftöffnung vorgesehen sein. Wenn die Größe der Blasluftöffnung veränderbar ist, können die Heizkammern mit unterschiedlichen Blasluftmengen versorgt werden, so dass dementsprechend über die Länge des Luftauslasses unterschiedliche Heißluftmengen austreten.

Zumindest eine abströmseitige Ansaugöffnung kann im Bereich der Unterseite des Schrumpfrahmens angeordnet sein.

Zumindest eine abströmseitige Ansaugöffnung kann angrenzend zum Luftauslass angeordnet sein. Durch eine solche Ausgestaltung kann bereits vorerwärmte Sekundärluft angesaugt werden. Durch das Ansaugen vorerwärmter Sekundärluft kann ein Teil der heißen Heißluft wieder in den Aufwärmkreislauf zurückgeführt werden. Hierdurch findet eine Wärmerückgewinnung statt. Eine niedrigere Heiztemperatur kann hierdurch eingestellt und somit Energie gespart werden.

Es bietet sich an, wenn sich zumindest eine Heizkammer nahezu über die komplette Länge einer Seite des Schrumpfrahmens, d. h. eines Rahmensegments, vorzugsweise über die komplette Länge einer Seite des Schrumpfrahmens, erstreckt. Es ist selbstverständlich aber auch möglich, dass in einem Rahmensegment mehrere nebeneinander angeordnete Heizkammern vorgesehen sind.

Dabei kann in zumindest einer Heizkammer nur ein Strömungskanal vorgesehen sein, wobei sich der Strömungskanal nahezu über die komplette Breite der Heizkammer, vorzugsweise über die komplette Breite der Heizkammer, erstreckt. Es ist selbstverständlich aber auch möglich, dass in einer Heizkammer mehrere nebeneinander angeordnete Strömungskanäle vorgesehen sind, die entweder von einem gemeinsamen Ansaugkanal umschlossen werden oder der zweite Teilbereich durch mehrere Ansaugkanäle gebildet wird.

Zumindest ein Strömungskanal kann einen rechteckigen Strömungsquerschnitt aufweisen.

In zumindest einem Strömungskanal kann wenigstens ein, vorzugsweise sich zwischen der anströmseitigen Eingangsöffnung und der abströmseitigen Ausgangsöffnung erstreckendes, Luftleitelement vorgesehen sein. Hierdurch kann das Gemisch aus Blasluft und Sekundärluft innerhalb des Strömungskanals in eine gewünschte Richtung geführt werden.

Zumindest ein Luftleitelement kann als Blech ausgebildet sein, das beispielsweise eben ausgebildet ist. Es ist selbstverständlich auch möglich, dass das Blech ein Oberflächenrelief zur Vergrößerung der Fläche aufweist.

Die Wandungen der Heizkammer können mit einem hitzebeständigen Isoliermaterial ausgekleidet sein. Unter einem hitzebeständigen Isoliermaterial wird ein Isoliermaterial verstanden, das Temperaturen bis zu 700°C standhält.

Der Luftauslass kann als längs der Innenseite des Schrumpfrahmens erstreckende Schlitzdüse ausgebildet sein, die beidseitig durch Leitbleche begrenzt ist, die unter einem Winkel zu der durch den Schrumpfrahmen aufgespannten Ebene angeordnet sind.

Ferner kann der Endbereich der Trennwandung die Leitbleche bilden.

Dabei bietet es sich an, wenn die Winkelstellung zumindest eines Leitblechs veränderbar ist.

Zumindest ein Heizelement kann als Heizstab, vorzugsweise als ein Keramik umfassender Heizstab, ausgebildet sein. Heizstäbe können U-förmig ausgebildet sein und erstrecken sich vorzugsweise parallel zu dem betreffenden Rahmensegment. Dabei können gleichpolige Anschlussenden benachbarter Heizstäbe beispielsweise durch Stromschienen miteinander verbunden sein.

Es sind aber auch andere Arten an Heizelementen denkbar. So kann zumindest ein Heizelement als Heizplatte, vorzugsweise als eine Keramik umfassende Heizplatte, ausgebildet sein.

Der Schrumpfrahmen kann einen Kontaktschalter mit einer zumindest bereichsweise gegenüber der Unterseite des Schrumpfrahmens unterseitig vorstehenden Kontaktfläche aufweisen. Kommt der Schrumpfrahmen beim Herabfahren in Kontakt, beispielsweise mit einem Förderer, wird die Abwärtsbewegung automatisch gestoppt.

Es bietet sich an, wenn dem Schrumpfrahmen eine bei drohender Kollision die Verfahrbewegung des Schrumpfrahmens unterbrechende Detektionseinrichtung zugeordnet ist. Die Detektionseinrichtung kann vorzugsweise kontaktlos arbeiten und beispielsweise als Lichtschranke ausgebildet sein. Eine Lichtschranke besteht aus einer Lichtstrahlenquelle (Sender) und einem Sensor (Empfänger). Der Sender und der Empfänger können beispielsweise ortsfest gegenüber dem Schrumpfrahmen angeordnet sein. Durchbricht der Schrumpfrahmen beim Verfahren den Lichtstrahl, wird die Verfahrbewegung gestoppt.

Es bietet sich an, wenn der Strömungsquerschnitt zumindest eines Lufteinlasses größer als oder gleich dem Gesamtströmungsquerschnitt aller diesem Lufteinlass zugeordneten Blasluftöffnungen ist. Sofern der Strömungsquerschnitt zumindest eines Lufteinlasses zumindest etwas größer als der Gesamtströmungsquerschnitt aller diesem Lufteinlass zugeordneten Blasluftöffnungen ist, bildet sich ein leichter Überdruck auf der Anströmseite jeder Blasluftöffnung.

Dabei kann zumindest ein Strömungskanal in einem Winkel α zwischen 10° und 60°, vorzugsweise in einem Winkel von etwa 30°, gegenüber der durch den Schrumpfrahmen aufgespannten Ebene angestellt sein.

Es bietet sich an, wenn zumindest ein Lufteinlass stumpf auf den Luftverteilkanal trifft und wenn im Innern des Luftverteilkanals in dem Bereich, in dem der Lufteinlass auf den Luftverteilkanal trifft, eine in Richtung des Lufteinlasses weisende Umlenkeinrichtung vorgesehen ist, die die einströmende Blasluft in Teilströme aufteilt und diese Teilströme jeweils in die beiden angeschlossenen Enden des Luftverteilkanals umlenkt.

Dabei kann die Umlenkeinrichtung wenigstens zwei winklig zueinander angeordnete Umlenkbereiche umfassen. Die Umlenkbereiche können beispielsweise eben oder gewölbt sein. Dabei kann die Oberfläche eines Umlenkbereichs glatt oder strukturiert, beispielsweise geriffelt, sein. Sofern zwei gegeneinander gerichtete ebene Umlenkbereiche vorgesehen sind, erinnert die Ausrichtung an ein Prisma mit einer dreieckigen Grundfläche.

Zumindest ein Umlenkbereich kann als Blech, vorzugsweise als Lochblech, ausgebildet sein. Bei Ausbildung als Lochblech wird im Bereich der Umlenkreinrichtung ein Luftpolster erzeugt, das zu einer Abbremsung der Strömungsgeschwindigkeit der Blasluft und zu einem Druckaufbau führt. Hierdurch wird eine gleichmäßigere Verteilung des Drucks innerhalb des entsprechenden Luftverteilkanals erreicht.

Im Folgenden wird ein in der Zeichnung dargestelltes Ausführungsbeispiel der Erfindung erläutert. Es zeigen:
- Fig. 1: eine Explosionszeichnung auf einen Schrumpfrahmen,
- Fig. 2: einen Schnitt in Richtung I-I durch den Gegenstand nach Fig. 1 und
- Fig. 3a-d: verschiedene Ansichten einer Umlenkreinrichtung.

In allen Figuren werden für gleiche bzw. gleichartige Bauteile übereinstimmende Bezugszeichen verwendet.

Der in den Figuren dargestellte Schrumpfrahmen wird zum Schrumpfen von Schrumpfhauben oder Schrumpffolien, die über einen Gutstapel 1 gezogen sind, eingesetzt. Der Schrumpfrahmen besteht aus vier Rahmensegmenten 2 und weist insoweit vier Rahmenseiten auf, die eine mittige Öffnung umgeben, welche so groß ist, dass der Schrumpfrahmen den Gutstapel 1 umgebend in Richtung des Pfeils 3 auf- und niederbewegt werden kann. Durch die über einen Luftauslass 4 in jedem Rahmensegment 2 austretende Heißluft 5 wird die Schrumpfhaube oder Schrumpffolie geschrumpft.

In dem dargestellten Ausführungsbeispiel sind zwei an jeweils ein Gebläse anschließbare Lufteinlässe 6 zum Zuführen von Blasluft 7 vorgesehen. Von jedem Lufteinlass 6 geht ein Luftverteilkanal 8 aus. Die beiden Luftverteilkanäle 8 sind mittels Klammern 9 gegeneinander fixiert. Der erste Luftverteilkanal 8 versorgt über entsprechende unterseitige Blasluftöffnungen 10 Heizkammern 11 des einen Paars gegenüberliegender Rahmensegmente 2 mit Blasluft 7, während der zweite Luftverteilkanal 8 über entsprechende unterseitige Blasluftöffnungen 10 Heizkammern 11 des anderen Paars gegenüberliegender Rahmensegmente 2 mit Blasluft 7 versorgt. Damit können die beiden Paare zweier gegenüberliegender paralleler Seiten des Gutstapels 1 unterschiedlich mit Heißluft 5 beaufschlagt werden. Bei einer Blasluftöffnung 10 kann es sich um eine einfache Bohrung mit einem Durchmesser von etwa 8 mm handeln. Es ist aber auch durchaus möglich, dass die Blasluftöffnung 10 düsenartig ausgebildet ist. Im Bereich jedes Lufteinlasses 6 ist eine geeignete Vorrichtung vorgesehen, um eine gewünschte Aufteilung der zugeführten Blasluft 7 auf die Heizkammern 11 der beiden über diesen Lufteinlass 6 versorgten Rahmensegmente 2 sicherzustellen.

In jedem Rahmensegment 2 ist eine an den zugehörigen Lufteinlass 6 anschließende, durch Wandungen 12 gebildete Heizkammer 11 vorgesehen, die einen Heizkammereinlass 13 und einen Heizkammerauslass 14 sowie einen zwischen dem Heizkammereinlass 13 und dem Heizkammerauslass 14 vorgesehenes elektrisch beheizbares Heizelement 15 aufweist. Auf diese Weise wird die die Heizkammer 11 durchströmende Blasluft 7 in der Heizkammer 11 erhitzt. An den Heizkammerauslass 14 schließt sich der Luftauslass 4 an, über den die Heißluft 5 ausgeblasen wird.

In jeder Heizkammer 11 ist im Abstand zu jeder Wandung 12 der Heizkammer 11 eine Trennwandung 16 vorgesehen. Die zwei Trennwandungen 16 sind parallel ausgerichtet und erstrecken sich zwischen zwei gegenüberliegenden Wandungen 12 der Heizkammer 11. Diese Trennwandungen 16 teilen die Heizkammer 11 in einen als Strömungskanal 17 mit einer anströmseitigen Eingangsöffnung 18 und einer abströmseitigen Ausgangsöffnung 19 fungierenden ersten Teilbereich und in einen durch den Rest gebildeten als Ansaugkanal 20 zum Ansaugen von Sekundärluft 21 mit einer abströmseitigen Ansaugöffnung 22 und einer anströmseitigen Auslassöffnung 23 fungierenden zweiten Teilbereich auf. Der zweite Teilbereich besteht in dem dargestellten Ausführungsbeispiel insoweit aus dem zwischen der linken Wandung 12 und der linken Trennwandung 16 gebildeten Bereich mit einem rechteckigen Strömungsquerschnitt und aus dem zwischen der rechten Trennwandung 16 und der rechten Wandung 12 gebildeten Bereich mit einem rechteckigen Strömungsquerschnitt. Die Heizelemente 15 sind im Inneren des Strömungskanals 17 angeordnet.

Jeder anströmseitigen Eingangsöffnung 18 ist zumindest eine, auf die anströmseitige Eingangsöffnung 18 dieses Strömungskanals 17 ausgerichtete Blasluftöffnung 10 unter Bildung zumindest eines Seiteneinlasses 24 zugeordnet. In dem dargestellten Ausführungsbeispiel ist der Seiteneinlass 24 ringförmig ausgebildet, da die Blasluftöffnung 10 im Abstand zur anströmseitigen Eingangsöffnung 18 angeordnet ist und insoweit ein umlaufender Spalt als Seiteneinlass 24 entsteht.

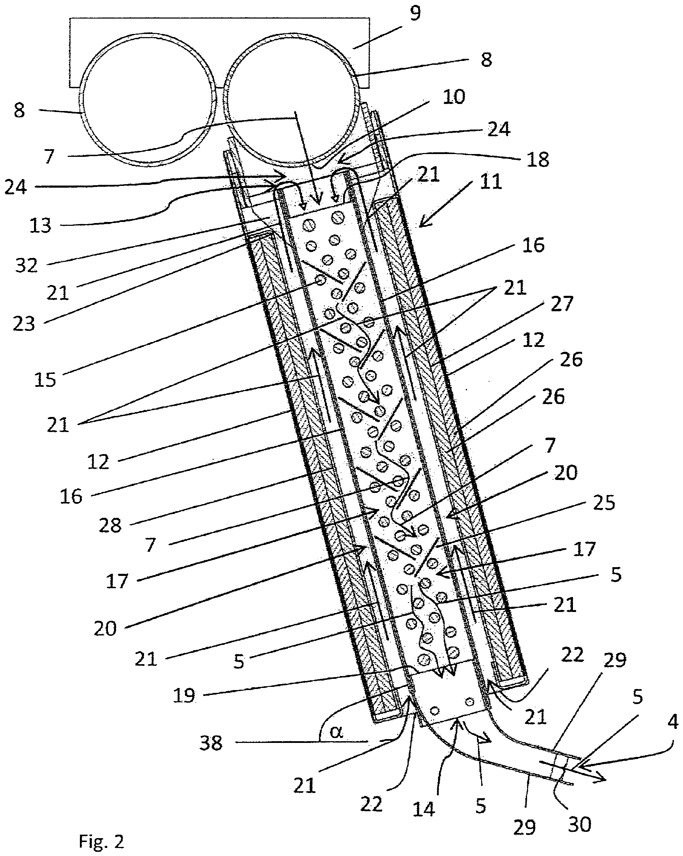

Die vom Gebläse zugeführte Blasluft (Pfeil 7) wird über die Blasluftöffnung 10 in die dieser Blasluftöffnung 10 zugeordneten anströmseitigen Eingangsöffnung 18 geblasen. Hierdurch wird Sekundärluft 21 über den Seiteneinlass 24 mit in den Strömungskanal 17 (Pfeil 21) eingesaugt. Die Sekundärluft 21 wird, wie in Fig. 2 dargestellt, über die abströmseitige Ansaugöffnung 22 im Bereich der Unterseite des Schrumpfrahmens angesaugt und strömt dann in Richtung der Pfeile 21 durch den Ansaugkanal 20 nach oben und wird im Bereich der anströmseitigen Eingangsöffnung 18 durch die Blasluft 7 umgelenkt und in den Strömungskanal 17 geblasen. Durch die Anordnung der abströmseitigen Ansaugöffnung 22 im Bereich der Unterseite des Schrumpfrahmens wird bereits vorerwärmte Sekundärluft 21 angesaugt.

Bei dem dargestellten Ausführungsbeispiel erstreckt sich die Heizkammer 11, die einen rechteckigen Querschnitt aufweist, nahezu über die komplette Länge eines Rahmensegments 2. Dabei ist in jeder Heizkammer 11 ein Strömungskanal 17 vorgesehen, wobei der Strömungskanal 17 einen rechteckigen Strömungsquerschnitt aufweist. In dem dargestellten Ausführungsbeispiel umfasst der Ansaugkanal 20 den Strömungskanal 17.

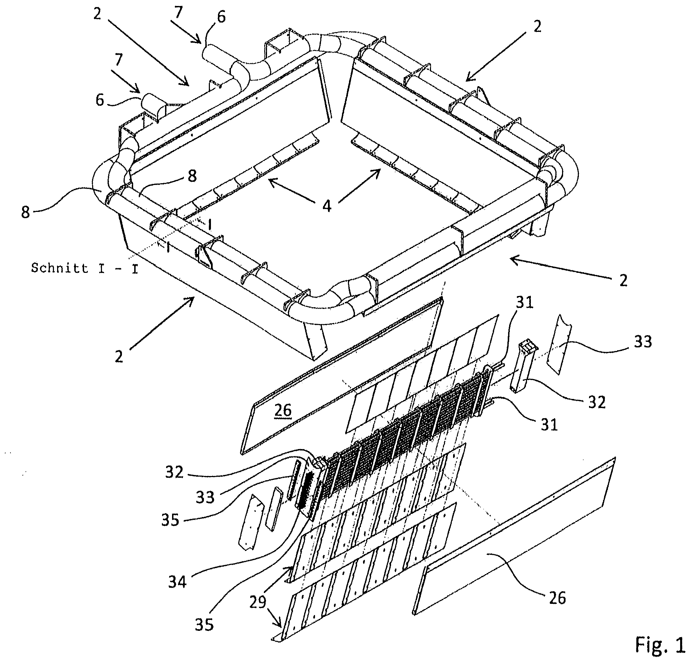

In dem Strömungskanal 17 sind in dem dargestellten Ausführungsbeispiel mehrere Luftleitelemente 25 zwischen der anströmseitigen Eingangsöffnung 18 und der abströmseitigen Ausgangsöffnung 19 vorgesehen, die in dem dargestellten Ausführungsbeispiel jeweils als Blech ausgebildet sind. Die Luftleitelemente 25 sind in dem Strömungskanal 17 entgegengesetzt schräg zur generellen Längserstreckung des Strömungskanals 17 und seitlich versetzt zur Längserstreckung des Strömungskanals 17 angeordnet. Hierdurch wird die Blasluft 7, die Sekundärluft 21 und die Heißluft 5 zickzackförmig von der anströmseitigen Eingangsöffnung 18 durch den Strömungskanal 17 zur abströmseitigen Ausgangsöffnung 19 geführt. Selbstverständlich sind auch andere Ausrichtungen und Ausgestaltungen der Luftleitelemente 25 möglich. Die Wandungen 12 der Heizkammer 11 sind in dem dargestellten Ausführungsbeispiel mit einem zweilagigen Isoliermaterial 26 ausgekleidet, wobei zwischen beiden Lagen 26 eine Aluminiumfolie 27 angeordnet ist. Die jeweils innere Schicht des Isoliermaterials 26 ist mit einem Blech 28 abgedeckt. Als Isoliermaterial 26 kann beispielsweise eine Hochtemperatur-Isolationsmatte aus Silica-Aerogel und einer Verstärkung aus Glasfaservlieswatte verwendet werden. Wie Fig. 2 zu entnehmen ist, ist das zweilagige Isoliermaterial 26 an der Innenseite der Wandung 12 der Heizkammer 11 angeordnet. Aus Gründen der Übersichtlichkeit sind die Wandungen 12 und die Bleche 28 in Fig. 1 nicht dargestellt.

Jeder Luftauslass 4 ist als längs der Innenseite des Rahmensegments 2 erstreckende Schlitzdüse ausgebildet, die beidseitig durch Leitbleche 29 begrenzt ist, die unter einem Winkel zu der durch den Schrumpfrahmen aufgespannten Ebene angeordnet sind. In dem dargestellten Ausführungsbeispiel stellen die Leitbleche 29 den Endbereich der Trennwandung 16 dar, wobei die beiden Leitbleche 29 über Abstandshalter 30 gegeneinander verschraubt sind.

Als Heizelemente 15 sind stabförmig ausgebildete Heizstäbe vorgesehen, die zu einem Paket gebündelt sind. Auf jeder Seite des Pakets sind vier Gewindestangen 31 vorgesehen, die in entsprechende Ausnehmungen in einer Halterung 32 eingreifen. Endseitig schließt sich auf beiden Seiten ein Abschlusselement 33 an. An der in Fig. 1 linken Seite des Paketes sind Anschlussenden 34 der Heizelemente 15. Mittels zweier Stromanschlüsse 35 werden die Anschlussenden 34 an ein Spannungsnetz angeschlossen. Nach Anbringen der Stromschienen 35 wird der Bereich noch durch ein Isolationselement 36 und ein Abschlussblech 37 abgedeckt.

Wie Fig. 2 zu entnehmen ist, ist bei dem dargestellten Ausführungsbeispiel der Strömungskanal 17 in einem Winkel α von etwa 15° gegenüber der durch den Schrumpfrahmen aufgespannten Ebene, die durch die gestrichelt dargestellte Linie 38 angedeutet ist, angestellt. Da die Wandungen 12 der Heizkammer 11 und der Strömungskanal 17 parallel ausgerichtet sind, ist auch die Heizkammer 11 in einem Winkel α von etwa 15° gegenüber der durch den Schrumpfrahmen aufgespannten Ebene (Linie 38) angestellt.

Als Luftverteilkanal 8 kann beispielsweise ein Rundrohrahmen mit einem Durchmesser von etwa 80 mm vorgesehen sein. Jeder Luftverteilkanal 8 mit dem ihm zugeordneten Gebläse sorgt für ein Ausblasen auf zwei gegenüberliegenden Seiten des Schrumpfrahmens. Durch den Überdruck im Luftverteilkanal 8 wird die Blasluft 7 durch die Blasluftöffnungen 10 in Form eines gerichteten Stroms in die Heizkammer 11 geblasen. Hierbei entsteht ein Unterdruck, so dass Sekundärluft 21 angesaugt wird. Damit ist ein höherer Gesamtluftstrom an Heißluft 5 erzielbar.

Wie Fig. 1 zu entnehmen ist, ist bei dem oberen Luftverteilkanal 8 der Lufteinlass 6 als Stutzen ausgebildet. Von dem Lufteinlass 6 zweigen die beiden winklig ausgebildeten Enden des umlaufenden Luftverteilkanals 8 ab. Die einströmende Blasluft 7 wird in zwei Teilströme aufgeteilt, wobei die beiden Teilströme in die beiden angeschlossenen Enden des Luftverteilkanals 8 gelenkt werden. Dieser obere Luftverteilkanal 8 versorgt das in Fig. 1 links unten angeordnete Rahmensegment 2 und das in Fig. 1 rechts oben angeordnete Rahmensegment 2 mit Blasluft 7.

Über den unteren Luftverteilkanal 8 werden das in Fig. 1 links oben angeordnete Rahmensegment 2 und das in Fig. 1 rechts unten angeordnete Rahmensegment 2 mit Blasluft 7 versorgt. Auch hier ist der Lufteinlass 6 als Stutzen ausgebildet, der aber stumpf in den umlaufenden Luftverteilkanal 8 mündet. Für eine Führung der Blasluft 7 ist im Innern des Luftverteilkanals 8 in dem Bereich, in dem der Lufteinlass 6 auf den Luftverteilkanal 8 trifft, eine in Richtung des Lufteinlasses 6 weisende Umlenkeinrichtung 38 vorgesehen.

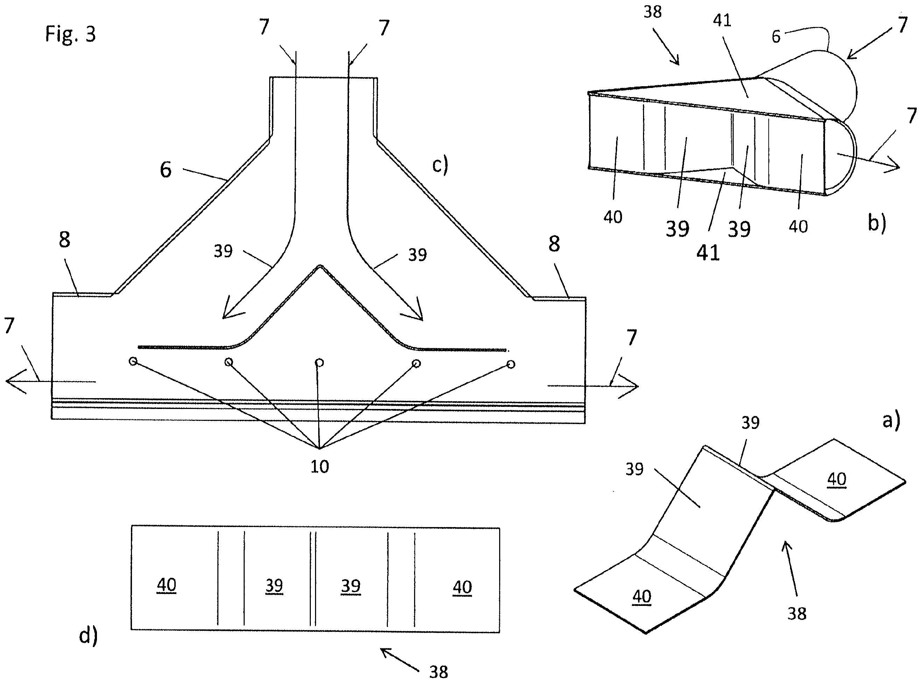

Eine solche Umlenkeinrichtung 38 ist aus unterschiedlichen Ansichten in den Fig. 3a-d dargestellt. Die Funktion der Umlenkeinrichtung 38 besteht in der Aufteilung der einströmenden Blasluft 7 in zwei Teilströme und in der Umlenkung dieser Teilströme jeweils in die beiden angeschlossenen Enden des Luftverteilkanals 8. Darüber hinaus verhindert die Umlenkeinrichtung 38, dass ein großer Anteil der Blasluft 7 über die Blasluftöffnungen 10, die in Verlängerung des Lufteinlasses 6 liegen, ausströmt.

In dem dargestellten Ausführungsbeispiel umfasst die Umlenkeinrichtung 38 zwei winklig zueinander angeordnete und eben ausgebildete Umlenkbereiche 39, die aus Blech bestehen. Mittels zweier Haltebleche 40 sind die Umlenkbereiche 39 in dem Luftverteilkanal 8 befestigt. Seitlich sind die Umlenkbereiche 39 und die Haltebleche 40 durch jeweils ein Seitenteil 41 eingefasst. Die Form der Umlenkreinrichtung 38 ähnelt einem Prisma mit einer dreieckigen Grundfläche.

## Patentansprüche

1. Schrumpfrahmen mit wenigstens einem an ein Gebläse anschließbaren Lufteinlass (6) zum Zuführen von Blasluft (7), mit zumindest einer an den Lufteinlass (6) anschließenden, durch Wandungen (12) gebildeten Heizkammer (11) mit einem Heizkammereinlass (13) und einem Heizkammerauslass (14) sowie einem zwischen dem Heizkammereinlass (13) und dem Heizkammerauslass (14) vorgesehenen, vorzugsweise elektrisch beheizbaren, Heizelement (15), durch das die die Heizkammer (11) durchströmende Blasluft (7) in der Heizkammer (11) erhitzt wird, wobei der Schrumpfrahmen weiterhin noch einen sich an den Heizkammerauslass (14) anschließenden Luftauslass (4) zum Ausblasen der Heißluft (5) aufweist, wobei in zumindest einer Heizkammer (11) im Abstand zu zumindest einer Wandung (12) der Heizkammer (11), vorzugsweise im Abstand zu jeder Wandung (12) der Heizkammer (11), wenigstens eine, vorzugsweise rohrförmige, Trennwandung (16) vorgesehen ist, welche die Heizkammer (11) in einen als Strömungskanal (17) mit einer anströmseitigen Eingangsöffnung (18) und einer abströmseitigen Ausgangsöffnung (19) fungierenden ersten Teilbereich und in einen durch den Rest gebildeten als Ansaugkanal (20) zum Ansaugen von Sekundärluft (21) mit einer abströmseitigen Ansaugöffnung (22) und einer anströmseitigen Auslassöffnung (23) fungierenden zweiten Teilbereich aufteilt, wobei wenigstens eines der Heizelemente (15) im Inneren des Strömungskanals (17) angeordnet ist, und wobei der anströmseitigen Eingangsöffnung (18) wenigstens eines Strömungskanals (17) zumindest eine, auf die anströmseitige Eingangsöffnung (18) dieses Strömungskanals (17) ausgerichtete Blasluftöffnung (10) unter Bildung zumindest eines Seiteneinlasses (24) zugeordnet ist, über die die vom Gebläse zugeführte Blasluft (7) in die dieser Blasluftöffnung (10) zugeordnete anströmseitige Eingangsöffnung (18) dieses Strömungskanals (17) geblasen wird, so dass durch die in den Strömungskanal (17) einströmende Blasluft (7) Sekundärluft (21) über den Seiteneinlass (24) mit in den Strömungskanal (17) eingesaugt wird.

2. Schrumpfrahmen nach dem vorhergehenden Anspruch, **dadurch gekennzeichnet, dass** der Schrumpfrahmen einen, vorzugsweise im Außenbereich des Schrumpfrahmens angeordneten, vom Lufteinlass (6) ausgehenden, vorzugsweise umlaufend ausgebildeten, Luftverteilkanal (8) aufweist, in dem zumindest eine Blasluftöffnung (10) vorgesehen ist.

3. Schrumpfrahmen nach dem vorhergehenden Anspruch, **dadurch gekennzeichnet, dass** in dem Luftverteilkanal (8) zumindest eine, vorzugsweise als Klappe ausgebildete, Verstelleinrichtung zur Veränderung des Strömungsquerschnittes in dem Luftverteilkanal (8) vorgesehen ist.

4. Schrumpfrahmen nach einem der vorhergehenden Ansprüche, **dadurch gekennzeichnet, dass** die Größe zumindest einer Blasluftöffnung (10) veränderbar ist.

5. Schrumpfrahmen nach einem der vorhergehenden Ansprüche, **dadurch gekennzeichnet, dass** zumindest eine abströmseitige Ansaugöffnung (22) im Bereich der Unterseite des Schrumpfrahmens angeordnet ist.

6. Schrumpfrahmen nach einem der vorhergehenden Ansprüche, **dadurch gekennzeichnet, dass** zumindest eine abströmseitige Ansaugöffnung (22) angrenzend zum Luftauslass (4) angeordnet ist.

7. Schrumpfrahmen nach einem der vorhergehenden Ansprüche, **dadurch gekennzeichnet, dass** sich zumindest eine Heizkammer (11) nahezu über die komplette Länge einer Seite des Schrumpfrahmens, vorzugsweise über die komplette Länge einer Seite des Schrumpfrahmens, erstreckt.

8. Schrumpfrahmen nach einem der vorhergehenden Ansprüche, **dadurch gekennzeichnet, dass** in zumindest einer Heizkammer (11) nur ein Strömungskanal (17) vorgesehen ist, wobei sich der Strömungskanal (17) nahezu über die komplette Breite der Heizkammer (11), vorzugsweise über die komplette Breite der Heizkammer (11), erstreckt.

9. Schrumpfrahmen nach einem der vorhergehenden Ansprüche, **dadurch gekennzeichnet, dass** zumindest ein Strömungskanal (17) einen rechteckigen Strömungsquerschnitt aufweist.

10. Schrumpfrahmen nach einem der vorhergehenden Ansprüche, **dadurch gekennzeichnet, dass** in zumindest einem Strömungskanal (17) wenigstens ein, vorzugsweise sich zwischen der anströmseitigen Eingangsöffnung (18) und der abströmseitigen Ausgangsöffnung (19) erstreckendes, Luftleitelement (25) vorgesehen ist.

11. Schrumpfrahmen nach dem vorhergehenden Anspruch, **dadurch gekennzeichnet, dass** zumindest ein Luftleitelement (25) als Blech ausgebildet ist.

12. Schrumpfrahmen nach einem der vorhergehenden Ansprüche, **dadurch gekennzeichnet, dass** die Wandungen (12) der Heizkammer (11) mit einem hitzebeständigen Isoliermaterial (26) ausgekleidet sind.

13. Schrumpfrahmen nach einem der vorhergehenden Ansprüche, **dadurch gekennzeichnet, dass** der Luftauslass (4) als längs der Innenseite des Schrumpfrahmens erstreckende Schlitzdüse ausgebildet ist, die beidseitig durch Leitbleche (29) begrenzt ist, die unter einem Winkel zu der durch den Schrumpfrahmen aufgespannten Ebene angeordnet sind.

14. Schrumpfrahmen nach dem vorhergehenden Anspruch, **dadurch gekennzeichnet, dass** der Endbereich der Trennwandung (16) die Leitbleche (29) bildet.

15. Schrumpfrahmen einem der Ansprüche 13 oder 14, **dadurch gekennzeichnet, dass** die Winkelstellung zumindest eines Leitblechs (29) veränderbar ist.

16. Schrumpfrahmen nach einem der vorhergehenden Ansprüche, **dadurch gekennzeichnet, dass** zumindest ein Heizelement (15) als Heizstab, vorzugsweise als ein Keramik umfassender Heizstab, ausgebildet ist.

17. Schrumpfrahmen nach einem der vorhergehenden Ansprüche, **dadurch gekennzeichnet, dass** zumindest ein Heizelement (15) als Heizplatte, vorzugsweise als eine Keramik umfassende Heizplatte, ausgebildet ist.

18. Schrumpfrahmen nach einem der vorhergehenden Ansprüche, **dadurch gekennzeichnet, dass** der Schrumpfrahmen einen Kontaktschalter mit einer zumindest bereichsweise gegenüber der Unterseite des Schrumpfrahmens unterseitig vorstehenden Kontaktfläche aufweist.

19. Schrumpfrahmen nach einem der vorhergehenden Ansprüche, **dadurch gekennzeichnet, dass** dem Schrumpfrahmen eine bei drohender Kollision die Verfahrbewegung des Schrumpfrahmens unterbrechende Detektionseinrichtung zugeordnet ist.

20. Schrumpfrahmen nach einem der vorhergehenden Ansprüche, **dadurch gekennzeichnet, dass** der Strömungsquerschnitt zumindest eines Lufteinlasses (6) größer als oder gleich dem Gesamtströmungsquerschnitt aller diesem Lufteinlass (6) zugeordneten Blasluftöffnungen (10) ist.

21. Schrumpfrahmen nach einem der vorhergehenden Ansprüche, **dadurch gekennzeichnet, dass** zumindest ein Strömungskanal (7) in einem Winkel α zwischen 10° und 60°, vorzugsweise in einem Winkel von etwa 30°, gegenüber der durch den Schrumpfrahmen aufgespannten Ebene angestellt ist.

22. Schrumpfrahmen nach einem der vorhergehenden Ansprüche, **dadurch gekennzeichnet, dass** zumindest ein Lufteinlass (6) stumpf auf den Luftverteilkanal (8) trifft und dass im Innern des Luftverteilkanals (8) in dem Bereich, in dem der Lufteinlass (6) auf den Luftverteilkanal (8) trifft, eine in Richtung des Lufteinlasses (6) weisende Umlenkeinrichtung (38) vorgesehen ist, die die einströmende Blasluft (7) in Teilströme aufteilt und diese Teilströme jeweils in die beiden angeschlossenen Enden des Luftverteilkanals (8) umlenkt.

23. Schrumpfrahmen nach dem vorhergehenden Anspruch, **dadurch gekennzeichnet, dass** die Umlenkeinrichtung (38) wenigstens zwei winklig zueinander angeordnete Umlenkbereiche umfasst.

24. Schrumpfrahmen nach dem vorhergehenden Anspruch, **dadurch gekennzeichnet, dass** zumindest ein Umlenkbereich (39) als Blech, vorzugsweise als Lochblech, ausgebildet ist.

## Claims

1. Shrinking frame with at least one air inlet (6) connectable to a blower apparatus for feeding of compressed air (7), with at least one heating chamber (11) connecting to the air inlet (6) and formed by walls (12), with a heating chamber inlet (13) and a heating chamber outlet (14), as well as a heating element (15), preferably electrically heatable, provided between the heating chamber inlet (13) and the heating chamber outlet (14), by means of which the compressed air (7) flowing through the heating chamber (11) is heated in the heating chamber (11), wherein the shrinking frame further comprises an air outlet (4) connecting to the heating chamber outlet (14) for the hot air (5) to blow out, wherein, in at least one heating chamber (11), at a distance from at least one wall (12) of the heating chamber (11), preferably at a distance from each wall (12) of the heating chamber (11), at least one partition wall (16) is provided, preferably tubular in shape, which divides the heating chamber (11) into a first part region functioning as a flow channel (17) with an inflow-side inlet opening (18) and an outflow-side outlet opening (19), and into a second part region, formed by the remainder and functioning as a suction channel (20) for suctioning in secondary air (21), with an outflow-side suction opening (22) and an inflow-side outlet opening (23), wherein at least one of the heating elements (15) is arranged in the interior of the flow channel (17), and wherein assigned to the inflow-side inlet opening (18) of at least one flow channel (17) is at least one compressed air opening (10), directed towards the inflow-side inlet opening (18) of this flow channel (17), with at least one side inlet (24) being formed, via which the compressed air (7) introduced from the blower is blown into the inflow-side inlet opening (18) of this flow channel (17), assigned to this compressed air opening (10), such that, due to the compressed air (7) flowing into the flow channel (17), secondary air (21) is suctioned in with it, via the side inlet (24), into the flow channel (17).

2. Shrinking frame according to the preceding claim, **characterised in that** the shrinking frame comprises an air distribution channel (8), preferably arranged in the outer region of the shrinking frame, going out from the air inlet (6) and preferably formed circumferentially, in which at least one compressed air opening (10) is provided.

3. Shrinking frame according to the preceding claim, **characterised in that** at least one adjustment device, preferably configured as a flap, is provided in the air distribution channel (8), for changing the flow cross-sections in the air distribution channel (8).

4. Shrinking frame according to any one of the preceding claims, **characterised in that** the size of at least one compressed air opening (10) can be changed.

5. Shrinking frame according to any one of the preceding claims, **characterised in that** at least one outflow-side suction opening (22) is arranged in the region of the underside of the shrinking frame.

6. Shrinking frame according to any one of the preceding claims, **characterised in that** at least one outflow-side suction opening (22) is arranged adjacent to the air outlet (4).

7. Shrinking frame according to any one of the preceding claims, **characterised in that** at least one heating chamber (11) extends almost over the complete length of a side of the shrinking frame, preferably over the complete length of one side of the shrinking frame.

8. Shrinking frame according to any one of the preceding claims, **characterised in that** in at least one heating chamber (11) only one flow channel (17) is provided, wherein the flow channel (17) extends almost over the complete width of the heating chamber (11), preferably over the complete width of the heating chamber (11).

9. Shrinking frame according to any one of the preceding claims, **characterised in that** at least one flow channel (17) exhibits a rectangular flow cross-section.

10. Shrinking frame according to any one of the preceding claims, **characterised in that** in at least one flow channel (17) at least one air guide element (25) is provided, preferably extending between the inflow-side inlet opening (18) and the outflow-side outlet opening (19).

11. Shrinking frame according to any one of the preceding claims, **characterised in that** at least one air guide element (25) is formed as a plate.

12. Shrinking frame according to any one of the preceding claims, **characterised in that** the walls (12) of the heating chamber (11) are clad with a heat-resistant insulating material (26).

13. Shrinking frame according to any one of the preceding claims, **characterised in that** the air outlet (4) is configured as a slot nozzle extending along the inner side of the shrinking frame, which is delimited on both sides by baffle plates (29), which are arranged at an angle to the plane spanned by the shrinking frame.

14. Shrinking frame according to any one of the preceding claims, **characterised in that** the end region of the partition wall (16) forms the baffle plates (29).

15. Shrinking frame according to one of claims 13 or 14, **characterised in that** the angle setting of at least one baffle plate (29) is changeable.

16. Shrinking frame according to any one of the preceding claims, **characterised in that** at least one heating element (15) is configured as a heating rod, preferably as a heating rod comprising a ceramic.

17. Shrinking frame according to any one of the preceding claims, **characterised in that** at least one heating element (15) is configured as a heating plate, preferably as a heating plate comprising a ceramic.

18. Shrinking frame according to any one of the preceding claims, **characterised in that** the shrinking frame comprises a contact switch, with a contact surface which at least in some areas projects underneath in relation to the underside of the shrinking frame.

19. Shrinking frame according to any one of the preceding claims, **characterised in that** assigned to the shrinking frame is a detection device, which, in the event of the threat of a collision, interrupts the travel movement of the shrinking frame.

20. Shrinking frame according to any one of the preceding claims, **characterised in that** the flow cross-section of at least one air inlet (6) is larger than or equal to the total flow cross-section of all the compressed air openings (10) assigned to this air inlet (6).

21. Shrinking frame according to any one of the preceding claims, **characterised in that** at least one flow channel (7) is arranged at an angle α of between 10º and 60º, preferably at an angle of some 30º, in relation to the plane spanned by the shrinking frame.

22. Shrinking frame according to any one of the preceding claims, **characterised in that** at least one air inlet (6) opens at an obtuse angle onto the air distribution channel (8), and that in the interior of the air distribution channel (8), in the region in which the air inlet (6) opens onto the air distribution channel (8), a deflection device (38) is provided pointing in the direction of the air inlet (6), which divides the inflowing compressed air (7) into part flows, and deflects these part flows in each case into the two connected ends of the air distribution channel (8).

23. Shrinking frame according to the preceding claim, **characterised in that** the deflection device (38) comprises at least two deflection regions arranged at an angle to one another.

24. Shrinking frame according to the preceding claim, **characterised in that** at least one deflection region (39) is configured as a plate, preferably as a perforated plate.

## Revendications

1. Cadre de thermorétraction comprenant au moins une admission d'air (6) pouvant être raccordée à une soufflerie et affectée à l'amenée d'air d'insufflation (7) ; au moins une chambre de chauffage (11) qui se rattache à ladite admission d'air (6), est formée par des parois (12), et est munie d'une entrée (13) et d'une sortie (14) ; ainsi qu'un élément chauffant (15) pouvant être chauffé de préférence électriquement, qui est prévu entre ladite entrée (13) de la chambre de chauffage et ladite sortie (14) de la chambre de chauffage et par lequel l'air d'insufflation (7), parcourant la chambre de chauffage (11), est chauffé dans ladite chambre de chauffage (11), ledit cadre de thermorétraction étant encore pourvu, par ailleurs, d'une sortie d'air (4) se rattachant à ladite sortie (14) de la chambre de chauffage et dévolue à l'expulsion de l'air chaud (5), sachant qu'au moins une cloison séparatrice (16) préférentiellement tubulaire, prévue dans au moins une chambre de chauffage (11) à distance d'au moins une paroi (12) de la chambre de chauffage (11), de préférence à distance de chaque paroi (12) de ladite chambre de chauffage (11), scinde ladite chambre de chauffage (11) en une première région partielle remplissant la fonction d'un canal d'écoulement (17) comportant une ouverture d'entrée (18) située côté afflux et une ouverture de sortie (19) située côté décharge, et en une seconde région partielle formée par la partie restante et remplissant la fonction d'un canal d'aspiration (20) qui, conçu pour aspirer de l'air secondaire (21), comporte une ouverture d'aspiration (22) située côté décharge et une ouverture d'évacuation (23) située côté afflux, sachant qu'au moins l'un des éléments chauffants (15) est logé à l'intérieur dudit canal d'écoulement (17), et sachant qu'au moins un orifice (10) dédié à l'air d'insufflation est associé à l'ouverture d'entrée (18) d'au moins un canal d'écoulement (17), située côté afflux, et est orienté vers l'ouverture d'entrée (18) de ce canal d'écoulement (17), située côté afflux, en formant au moins une admission latérale (24) par l'intermédiaire de laquelle l'air d'insufflation (7), délivré par la soufflerie, est insufflé dans ladite ouverture d'entrée (18) de ce canal d'écoulement (17), située côté afflux et associée à cet orifice (10) dédié à l'air d'insufflation, de telle sorte que, sous l'action dudit air d'insufflation (7) pénétrant dans le canal d'écoulement (17), de l'air secondaire (21) soit conjointement aspiré dans ledit canal d'écoulement (17) en empruntant ladite admission latérale (24).

2. Cadre de thermorétraction selon la revendication précédente, **caractérisé par le fait que** ledit cadre de thermorétraction est muni d'un canal (8) de répartition d'air qui est, de préférence, situé dans la région extérieure dudit cadre de thermorétraction, est de réalisation préférentiellement périphérique, part de l'admission d'air (6), et dans lequel est prévu au moins un orifice (10) dédié à l'air d'insufflation.

3. Cadre de thermorétraction selon la revendication précédente, **caractérisé par le fait qu'**au moins un dispositif de réglage, de préférence réalisé sous la forme d'un volet, est prévu dans le canal (8) de répartition d'air afin de modifier la section transversale d'écoulement dans ledit canal (8) de répartition d'air.

4. Cadre de thermorétraction selon l'une des revendications précédentes, **caractérisé par** la faculté de modifier la taille d'au moins un orifice (10) dédié à l'air d'insufflation.

5. Cadre de thermorétraction selon l'une des revendications précédentes, **caractérisé par le fait qu'**au moins une ouverture d'aspiration (22), située côté décharge, se trouve dans la région de la face inférieure dudit cadre de thermorétraction.

6. Cadre de thermorétraction selon l'une des revendications précédentes, **caractérisé par le fait qu'**au moins une ouverture d'aspiration (22), située côté décharge, occupe une position limitrophe de la sortie d'air (4).

7. Cadre de thermorétraction selon l'une des revendications précédentes, **caractérisé par le fait qu'**au moins une chambre de chauffage (11) s'étend approximativement sur la longueur intégrale d'une face dudit cadre de thermorétraction, de préférence sur l'intégralité de la longueur d'une face dudit cadre de thermorétraction.

8. Cadre de thermorétraction selon l'une des revendications précédentes, **caractérisé par le fait qu'**un unique canal d'écoulement (17) est prévu dans au moins une chambre de chauffage (11), ledit canal d'écoulement (17) s'étendant approximativement sur la largeur intégrale de ladite chambre de chauffage (11), de préférence sur l'intégralité de la largeur de ladite chambre de chauffage (11).

9. Cadre de thermorétraction selon l'une des revendications précédentes, **caractérisé par le fait qu'**au moins un canal d'écoulement (17) présente une section transversale d'écoulement rectangulaire.

10. Cadre de thermorétraction selon l'une des revendications précédentes, **caractérisé par le fait qu'**au moins un élément (25) de guidage d'air, s'étendant de préférence entre l'ouverture d'entrée (18) située côté afflux et l'ouverture de sortie (19) située côté décharge, est prévu dans au moins un canal d'écoulement (17).

11. Cadre de thermorétraction selon la revendication précédente, **caractérisé par le fait qu'**au moins un élément (25) de guidage d'air est réalisé sous la forme d'une tôle.

12. Cadre de thermorétraction selon l'une des revendications précédentes, **caractérisé par le fait que** les parois (12) de la chambre de chauffage (11) sont revêtues d'un matériau isolant (26) thermorésistant.

13. Cadre de thermorétraction selon l'une des revendications précédentes, **caractérisé par le fait que** la sortie d'air (4) est réalisée sous la forme d'une buse fendue s'étendant le long de la face intérieure dudit cadre de thermorétraction et délimitée, de part et d'autre, par des tôles directrices (29) disposées en décrivant un angle par rapport au plan démarqué par ledit cadre de thermorétraction.

14. Cadre de thermorétraction selon la revendication précédente, **caractérisé par le fait que** la région extrême de la cloison séparatrice (16) forme les tôles directrices (29).

15. Cadre de thermorétraction selon l'une des revendications 13 ou 14, **caractérisé par** la faculté de modifier la position angulaire d'au moins une tôle directrice (29).

16. Cadre de thermorétraction selon l'une des revendications précédentes, **caractérisé par le fait qu'**au moins un élément chauffant (15) est réalisé sous la forme d'un barreau chauffant, préférentiellement d'un barreau chauffant incluant de la céramique.

17. Cadre de thermorétraction selon l'une des revendications précédentes, **caractérisé par le fait qu'**au moins un élément chauffant (15) est réalisé sous la forme d'un panneau chauffant, préférentiellement d'un panneau chauffant incluant de la céramique.

18. Cadre de thermorétraction selon l'une des revendications précédentes, **caractérisé par le fait que** ledit cadre de thermorétraction est pourvu d'un contacteur muni d'une surface de contact faisant saillie en partie basse, au moins par zones, vis-à-vis de la face inférieure dudit cadre de thermorétraction.

19. Cadre de thermorétraction selon l'une des revendications précédentes, **caractérisé par le fait qu'**un dispositif de détection, interrompant le déplacement dudit cadre de thermorétraction en cas de menace d'une collision, est associé audit cadre de thermorétraction.

20. Cadre de thermorétraction selon l'une des revendications précédentes, **caractérisé par le fait que** la section transversale d'écoulement d'au moins une admission d'air (6) est supérieure ou égale à la section transversale d'écoulement totale de tous les orifices (10) dédiés à l'air d'insufflation et associés à cette admission d'air (6).

21. Cadre de thermorétraction selon l'une des revendications précédentes, **caractérisé par le fait qu'**au moins un canal d'écoulement (7) est agencé suivant un angle α mesurant entre 10° et 60°, de préférence suivant un angle α d'environ 30° par rapport au plan démarqué par ledit cadre de thermorétraction.

22. Cadre de thermorétraction selon l'une des revendications précédentes, **caractérisé par le fait qu'**au moins une admission d'air (6) s'abouche bord à bord avec le canal (8) de répartition d'air ; et **par le fait qu'**un dispositif déflecteur (38), pointant en direction de l'admission d'air (6) et prévu à l'intérieur du canal (8) de répartition d'air, dans la région dans laquelle ladite admission d'air (6) s'abouche avec ledit canal (8) de répartition d'air, scinde l'air d'insufflation affluant (7) en des flux partiels, et dévie respectivement ces flux partiels vers les deux extrémités raccordées dudit canal (8) de répartition d'air.

23. Cadre de thermorétraction selon la revendication précédente, **caractérisé par le fait que** le dispositif déflecteur (38) inclut au moins deux zones déflectrices agencées angulairement l'une par rapport à l'autre.

24. Cadre de thermorétraction selon la revendication précédente, **caractérisé par le fait qu'**au moins une zone déflectrice (39) est réalisée sous la forme d'une tôle, préférentiellement d'une tôle perforée.
